# FASCICULE DE BREVET EUROPEEN

(11) **EP 2 885 524 B1**
(45) Date de publication et mention de la délivrance du brevet: **24.08.2016**
(21) Numéro de dépôt: 13756609.7
(22) Date de dépôt: 26.07.2013
(51) Int. Cl.: F02K 1/62, F02K 1/72, F02K 1/76

(54) **INVERSEUR DE POUSSÉE À GRILLES POUR TURBORÉACTEUR D'AÉRONEF**
KASKADENSCHUBUMKEHRVORRICHTUNG FÜR EIN FLUGZEUGGEBLÄSETRIEBWERK
CASCADE THRUST REVERSER FOR AN AIRCRAFT TURBOFAN

(30) Priorité: 20.08.2012 FR 1257867
(43) Date de publication de la demande: 24.06.2015
(73) Titulaire: Aircelle, 76700 Gonfreville L'Orcher (FR)
(72) Inventeur: PEYRON, Vincent, F-76620 Le Havre (FR); VALLEROY, Laurent Georges, F-76600 Le Havre (FR); DEPOORTERE, Franck, F-76600 Le Havre (FR)
(74) Mandataire: Gaillarde, Frédéric F. Ch.
(86) Numéro de dépôt international: PCT/FR2013/051815
(87) Numéro de publication internationale: WO 2014/029929

(56) Documents cités:
- WO-A1-2010/142881
- FR-A1- 2 960 600
- US-A- 3 511 055

## Description

La présente invention se rapporte à un inverseur de poussée à grilles pour turboréacteur d'aéronef.

Comme cela est connu en soi, un inverseur de poussée à grilles comprend typiquement une pluralité de grilles de déviation fixées en aval de la soufflante du turboréacteur, et un capot définissant la veine d'air froid du turboréacteur, monté coulissant entre une position dite de « jet direct » dans laquelle il recouvre les grilles de déviation, et une position dite de « jet inversé », dans laquelle il découvre ces grilles.

La position de jet direct correspond au mode de fonctionnement du turboréacteur et de sa nacelle associée en situation de croisière.

Le mode de fonctionnement en jet inversé correspond aux situations d'atterrissage, dans lesquelles on redirige vers l'avant de la nacelle une partie du flux d'air froid engendré par la soufflante, de manière à contribuer au freinage de l'avion.

Plus particulièrement, en situation de jet direct, des volets d'inversion de poussée montés pivotants à l'intérieur de la partie amont du capot coulissant, entravent le flux d'air froid engendré par la soufflante du turboréacteur, et le dirigent au moins en partie à travers les grilles de déviation, vers l'amont de la nacelle, permettant ainsi de réaliser les opérations de freinage souhaitées.

En situation de jet direct, ces volets d'inversion de poussée sont rangés dans des logements formés dans la partie amont du capot coulissant, définissant ainsi avec l'intrados de ce capot une continuité aérodynamique permettant la circulation du flux d'air froid depuis la soufflante vers l'aval de la nacelle, afin de fournir l'effort de poussée souhaité pour la propulsion de l'avion.

Un problème récurrent constaté est la vibration des volets d'inversion de poussée en situation de jet direct, perturbant la qualité de l'écoulement aérodynamique du flux froid et provoquant une usure prématurée des différentes articulations intervenant pour la mise en mouvement de ces volets d'inversion de poussée.

Un inverseur de poussée selon l'art antérieur est connu dans FR 2960600.

La présente invention vise notamment à résoudre ces inconvénients.

On atteint ce but de l'invention avec un inverseur de poussée à grilles, comprenant :
- un cadre avant fixe,
- un pluralité de grilles de déviation solidaires de ce cadre avant,
- un capot coulissant monté entre une position de jet direct où il recouvre ces grilles, et une position de jet inversé dans laquelle il découvre ces grilles,
- au moins un logement de réception de volet d'inversion de poussée formé dans la partie amont du capot coulissant,
- au moins un volet d'inversion de poussée monté pivotant dans ce logement, entre une position de jet direct où il est rangé dans ce logement, et une position de jet inversé dans lequel il est sorti de ce logement, et
- un mécanisme à bielles reliant ledit cadre avant audit volet, adapté pour faire pivoter ledit volet d'inversion de poussée de sa position de jet direct à sa position de jet inversé sous l'effet du coulissement dudit capot de sa position de jet direct à sa position de jet inversé,
cet inverseur de poussée étant remarquable en ce qu'il comprend un premier crochet monté fixe à l'intérieur dudit logement, et en ce que ledit mécanisme à bielles comprend une bielle télescopique comprenant :
- un corps muni d'un deuxième crochet,
- une tige montée coulissante à l'intérieur de ce corps,
- un ressort rappelant cette tige en position d'extension par rapport au corps, et
- une butée empêchant la tige de sortir du corps,
l'ensemble de ces organes étant agencés de sorte que :
- lorsque ledit capot coulissant et ledit volet sont en position de jet direct, ledit deuxième crochet est maintenu en prise avec ledit premier crochet et ledit volet est immobilisé au fond dudit logement par ladite tige soumise à une précontrainte engendrée par ledit ressort comprimé, et
- lorsque ledit capot coulissant est en début de coulissement de sa position de jet direct vers sa position de jet inversé, ledit deuxième crochet se désengage dudit premier crochet et ladite tige vient en butée d'extension dans ledit corps, permettant la mise en rotation dudit volet de sa position de jet direct vers sa position de jet inversé sous l'effort de traction exercé par ladite tige.

Grâce à la présence combinée de cette bielle télescopique à ressort d'actionnement du volet d'inversion de poussée, et des crochets montés d'une part dans le logement du volet et d'autre part sur le corps de la bielle télescopique, on obtient un verrouillage précontraint du volet d'inversion de poussée en position de jet direct, ce qui permet de supprimer tous les phénomènes de vibrations indésirables constatés dans la technique antérieure.

Suivant d'autres caractéristiques optionnelles de la présente invention :
- ledit mécanisme à bielles comprend en outre un triangle de bielles articulées, interposées entre ladite bielle télescopique, ledit logement et ledit volet d'inversion de poussée : comme cela est connu en soi, un tel triangle articulé permet notamment de créer le bras de levier nécessaire pour que les efforts de traction imprimés par la bielle télescopique lors du passage du capot coulissant de sa position de jet direct à sa position de jet inversé soient suffisants pour contrer les efforts exercés sur le volet par la pression dynamique de l'air dévié du flux froid du turboréacteur.

La présente invention se rapporte également à une nacelle pour moteur d'avion équipée d'un inverseur de poussée conforme à ce qui précède.

D'autres caractéristiques et avantages de la présente invention apparaîtront à la lumière de la description qui va suivre, et à l'examen des figures ci-annexées, dans lesquelles :
- la figure 1 représente en perspective la zone où se trouve un volet d'inversion de poussée d'un inverseur de poussée selon l'invention, lorsque cet inverseur se trouve en position de jet direct ;
- la figure 2 est une représentation schématique des principaux organes de la figure 1 ;
- la figure 3 est une vue de détail de la zone III de la figure 1 ;
- la figure 4 est une vue de détail de la zone IV de la figure 1 ;
- les figures 5 à 8 sont des vues analogues respectivement à celles des figures 1 à 4, lorsque l'inverseur de poussée est en train de passer de sa position de jet direct à sa position de jet inversé, et
- la figure 9 est une vue analogue à celle des figures 1 et 5, lorsque l'inverseur de poussée se trouve en position de jet indirect.

Sur l'ensemble de ces figures, des références identiques ou analogues désignent des organes ou ensembles d'organes identiques ou analogues.

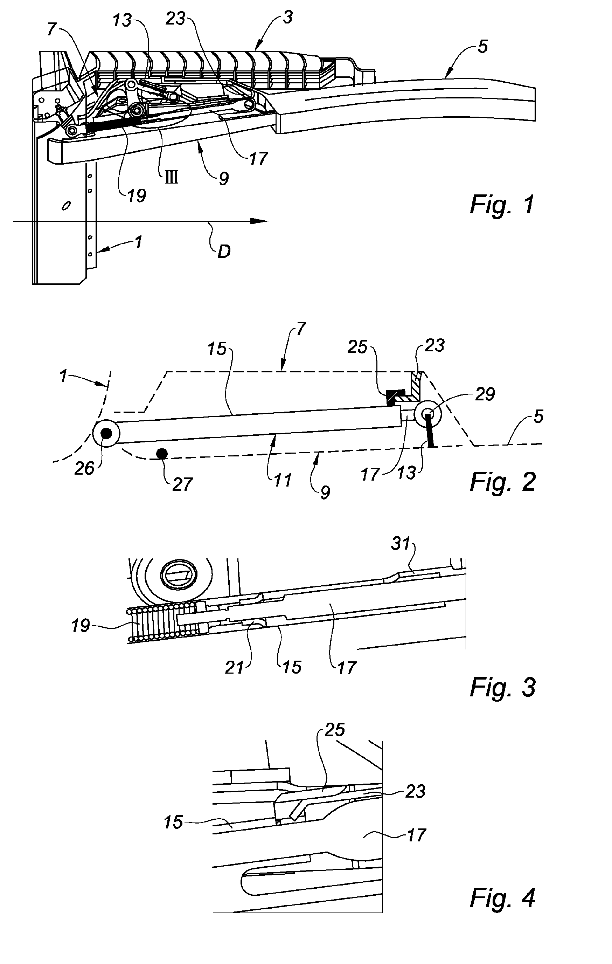

On se reporte à présent à la figure 1, sur laquelle on peut voir que l'inverseur de poussée selon l'invention comprend un cadre avant fixe 1, solidaire d'un carter de soufflante de turboréacteur (non représenté).

Le cadre avant fixe 1, définissant une forme sensiblement annulaire, supporte une pluralité de grilles de déviation 3 disposées côte-à-côte à la périphérie de ce cadre avant.

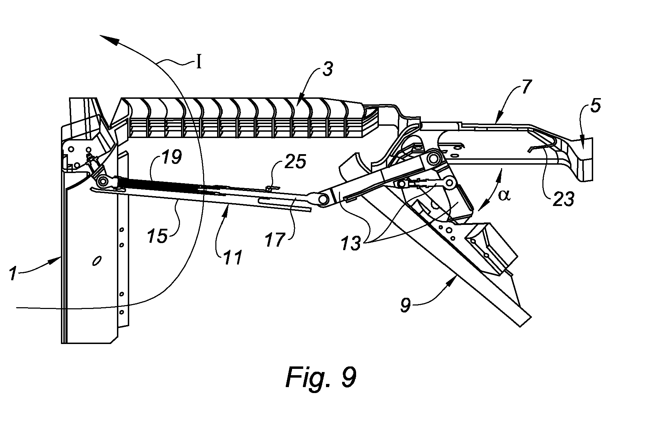

Un capot coulissant 5, comportant dans sa partie amont un logement 7, est mobile entre une position de jet direct représentée à la figure 1, dans laquelle il recouvre les grilles de déviation 3, et une position de jet indirect visible à la figure 9, dans laquelle il découvre ces grilles 3.

A l'intérieur du logement 7 du capot coulissant 5 sont montés côte-à-côte une pluralité de volets d'inversion de poussée 9, montés pivotants entre une position de jet direct représentée à la figure 1, dans laquelle ils se trouvent dans le prolongement aérodynamique du capot coulissant 5, et une position de jet inversé représentée à la figure 9, dans laquelle ils définissent un angle α prononcé par rapport à ce capot coulissant.

On va s'intéresser à présent de plus près aux mécanismes d'actionnement des volets d'inversion de poussée 9 entre leurs positions représentées aux figures 1 et 9.

Comme cela est visible sur les figures 1, 5 et 9, ces mécanismes comprennent chacun d'une part une bielle télescopique 11, et d'autre part un triangle articulé de bielles 13.

Le triangle articulé 13 est connu en soi, et l'originalité de la présente invention repose essentiellement sur la bielle télescopique 11.

Comme cela est visible notamment sur les figures1, 2, 5, 6 et 9, cette bielle télescopique 11 comprend d'une part un corps 15 monté pivotant sur le cadre avant 1, et d'autre part une tige 17 montée coulissante à l'intérieur de ce corps 15, un ressort 19 rappelant la tige 17 vers sa position d'extension visible à la figure 9, et une butée 21 empêchant la tige 17 de sortir du corps 19.

Un premier crochet 23, visible sur les figures 1, 2, 4, 5, 6, 8 et 9, est monté à l'intérieur du logement 7.

Un deuxième crochet 25, solidaire du corps 11, est apte à coopérer avec le premier crochet 23 lorsque le volet d'inversion de poussée se trouve dans la configuration de jet direct représentée aux figures 1 et 2.

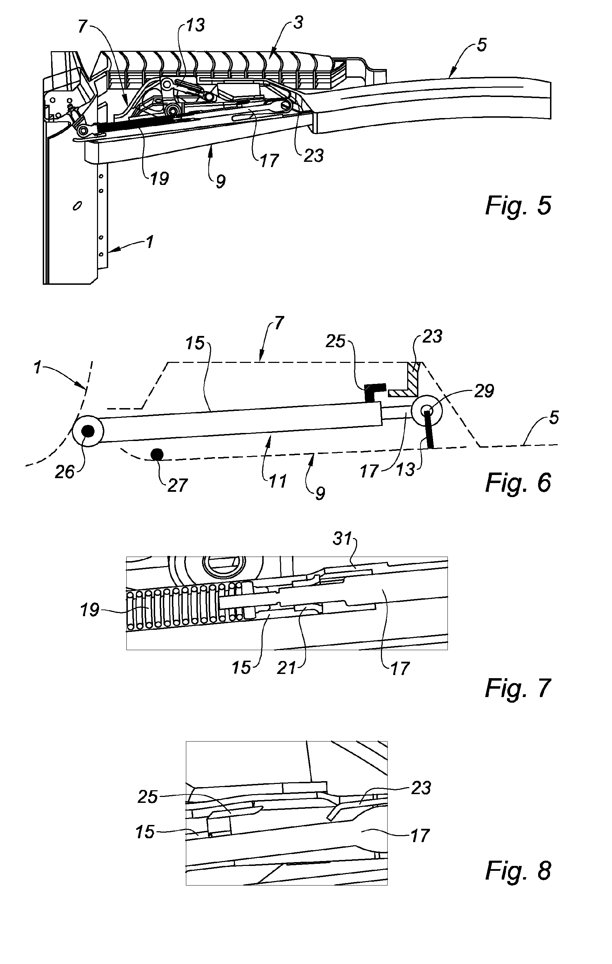

Les axes de rotation du corps 15 de la bielle télescopique 11 par rapport au cadre avant 1, du volet d'inversion 9 par rapport au logement 7, et de la tige 17 de la bielle télescopique 11 par rapport au triangle de bielles articulées 13, sont indiqués respectivement par les références 26, 27 et 29 des figures 2 et 6.

On va à présent décrire le mode de fonctionnement de l'inverseur de poussée selon l'invention, étant noté qu'en réalité une pluralité de volets d'inversion de poussée 9 sont disposés sous la pluralité de grilles de déviation 3.

En mode de fonctionnement de jet direct, le flux d'air froid engendré par la soufflante du turboréacteur (non représentée) circule d'amont en aval de la nacelle entourant le turboréacteur, comme cela est indiqué par la flèche D de la figure 1.

Le volet d'inversion de poussée 9 étant situé dans le prolongement aérodynamique du capot coulissant 5, l'écoulement du flux froid D est optimal et permet d'assurer la poussée nécessaire à la propulsion de l'avion.

Dans cette configuration, le deuxième crochet 25 solidaire du corps 15 de la bielle télescopique 11 est maintenu en prise avec le premier crochet 23 disposé à l'intérieur du logement 7, et le ressort 19 se trouve à l'état comprimé.

La combinaison d'une part de l'immobilisation du corps 15 de la bielle télescopique 11 par rapport au logement 7 grâce à la coopération des crochets 23 et 25, et d'autre part à la précontrainte exercée par le ressort comprimé 19 sur la tige 17 de la bielle télescopique 11, permet d'immobiliser franchement le volet d'inversion de poussée 9 à l'intérieur du logement 7, supprimant ainsi tout risque de vibration.

Lorsque le capot coulissant 5 commence à se déplacer de sa position de jet direct représentée à la figure 1 à sa position de jet indirect représentée à la figure 9, le deuxième crochet 25 se désengage du premier crochet 23, comme cela est visible sur les figures 5, 6 et 8.

Le volet 9 est ainsi déverrouillé de l'intérieur du logement 9.

Simultanément, le ressort 19 se détend, emmenant la tige 17 en position d'extension par rapport au corps 15 de la bielle télescopique 11, et ce jusqu'à ce que la butée 21 solidaire de cette tige 17 vienne se bloquer contre une butée complémentaire 31 définie par le corps 15.

L'arrivée en contact des deux butées 21 et 31 permet de stopper toute extension supplémentaire de la bielle télescopique 11, laquelle peut alors transmettre des efforts de traction entre le cadre avant 1 et le triangle de bielles articulées 13, permettant ainsi la mise en rotation du volet 9 autour de son axe d'articulation 27, jusqu'à ce qu'il se trouve dans la position de jet indirect représentée à la figure 9.

Dans cette position, le capot coulissant 5 découvre les grilles de déviation 3, et le volet 9 entrave la veine de flux froid engendrée par la soufflante du turboréacteur, permettant ainsi de dévier au moins une partie de ce flux froid vers l'amont de la nacelle à travers les grilles 3, comme cela est indiqué par la flèche I.

Lorsque l'inverseur de poussée repasse de sa position de jet indirect représentée à la figure 9 à sa position de jet direct représentée à la figure 1, le rangement du volet d'inversion de poussée 9 à l'intérieur de son logement 7 est facilité par la pression dynamique exercée par le flux d'air froid.

Le crochet 25 du corps 15 de la bielle télescopique 11 revient en engagement avec le crochet 23 monté à l'intérieur du logement 7, ce retour en prise étant facilité par des biseaux réalisés sur ces deux crochets, comme cela est visible notamment aux figures 4 et 8.

Le retour en prise des deux crochets 20 et 23 s'accompagne d'une remise en compression du ressort 19 par la tige 17 de la bielle télescopique, permettant donc à nouveau d'immobiliser le volet 9 à l'intérieur de son logement 7 par précontrainte, et de supprimer ainsi tout risque de vibration.

Bien entendu, la présente invention n'est nullement limitée aux modes de réalisation décrits et représentés, fournis à titre de simples exemples.

## Revendications

1. Inverseur de poussée à grilles, comprenant :
- un cadre avant fixe (1),
- une pluralité de grilles de déviation (3) solidaires de ce cadre avant (1),
- un capot coulissant (5) monté entre une position de jet direct où il recouvre ces grilles (3), et une position de jet inversé dans laquelle il découvre ces grilles (3),
- au moins un logement (7) de réception de volet d'inversion de poussée (9) formé dans la partie amont du capot coulissant (5),
- au moins un volet d'inversion de poussée (9) monté pivotant dans ce logement (7), entre une position de jet direct où il est rangé dans ce logement, et une position de jet inversé dans lequel il est sorti de ce logement (7), et
- un mécanisme à bielles (11, 13) reliant ledit cadre (1) avant audit volet (9), adapté pour faire pivoter ce volet (9) de sa position de jet direct à sa position de jet inversé sous l'effet du coulissement dudit capot (5) de sa position de jet direct à sa position de jet inversé,
cet inverseur de poussée étant remarquable en ce qu'il comprend un premier crochet (23) monté fixe à l'intérieur dudit logement (7), et en ce que ledit mécanisme à bielles (11, 13) comprend une bielle télescopique (11) comprenant :
- un corps (15) muni d'un deuxième crochet (25),
- une tige (17) montée coulissante à l'intérieur de ce corps (15),
- un ressort (19) rappelant cette tige (17) en position d'extension par rapport au corps (15), et
- une butée (21,31) empêchant la tige (17) de sortir du corps (15),
- l'ensemble de ces organes étant agencés de sorte que :
- lorsque ledit capot coulissant (5) et ledit volet (9) sont en position de jet direct, ledit deuxième crochet (25) est maintenu en prise avec ledit premier crochet (23) et ledit volet (9) est immobilisé au fond dudit logement (7) par ladite tige (17) soumise à une précontrainte engendrée par ledit ressort comprimé (19), et
- lorsque ledit capot coulissant (5) est en début de coulissement de sa position de jet direct vers sa position de jet inversé, ledit deuxième crochet (25) se désengage dudit premier crochet (23) et ladite tige (17) vient en butée d'extension dans ledit corps (15), permettant la mise en rotation dudit volet (9) de sa position de jet direct vers sa position de jet inversé sous l'effort de traction exercé par ladite tige (17).

2. Inverseur de poussée selon la revendication 1, dans lequel ledit mécanisme à bielles (11, 13) comprend en outre un triangle de bielles articulées (13), interposées entre ladite bielle télescopique (11), ledit logement (7) et ledit volet d'inversion de poussée (9).

3. Nacelle pour moteur d'avion équipée d'un inverseur de poussée conforme à l'une des revendications 1 ou 2.

## Patentansprüche

1. Schubumkehrer mit Gittern, der Folgendes umfasst :
- einen stationären vorderen Rahmen (1),
- eine Mehrzahl von Ablenkgittern (3), die fest mit dem vorderen Rahmen (1) verbunden ist,
- eine gleitende Haube (5), die zwischen einer Direktstrahlposition, in der sie diese Gitter (3) abdeckt, und einer Umkehrstrahlposition, in der sie diese Gitter (3) freilegt, installiert ist,
- mindestens eine Aufnahme (7) zum Aufnehmen einer Schubumkehrklappe (9), die in dem Teil stromaufwärts der gleitenden Haube (5) ausgebildet ist,
- mindestens eine Schubumkehrerklappe (9), die in dieser Aufnahme (7) zwischen einer Direktstrahlposition, in der sie in der Aufnahme verstaut ist, und einer Umkehrstrahlposition, in der sie aus dieser Aufnahme (7) ausgefahren ist, schwenkend installiert ist, und
- einen Pleuelmechanismus (11, 13), der den vorderen Rahmen (1) mit der Klappe (9) verbindet, der angepasst ist, um diese Klappe (9) von ihrer Direktstrahlposition zu ihrer Umkehrstrahlposition unter der Einwirkung des Gleitens der Haube (5) von ihrer Direktstrahlposition zu ihrer Umkehrstrahlposition schwenken zu lassen,
Schubumkehrer **dadurch gekennzeichnet, dass** er einen ersten Haken (23) umfasst, der stationär im Inneren der Aufnahme (7) installiert ist, und dass der Pleuelmechanismus (11, 13) ein Teleskoppleuel (11) umfasst, das Folgendes umfasst:
- einen Körper (15), der mit einem zweiten Haken (25) versehen ist,
- einen Schaft (17), der gleitend im Inneren dieses Körpers (15) installiert ist,
- eine Feder (19), die diesen Schaft (17) in Streckposition in Bezug zu dem Körper (15) zurückstellt, und
- einen Anschlag (21, 31), der den Schaft (17) daran hindert, aus dem Körper (15) auszufahren,
- wobei die Einheit dieser Organe derart eingerichtet ist, dass:
- wenn die gleitende Haube (5) und die Klappe (9) in Direktstrahlposition sind, der zweite Haken (25) im Eingriff mit dem ersten Haken (23) gehalten wird, und die Klappe (9) auf dem Grund der Aufnahme (7) durch den Schaft (17), der einer Vorspannung unterliegt, die von der Druckfeder (19) bewirkt wird, stillgestellt ist, und
- wenn die gleitende Haube (5) am Beginn des Gleitens von ihrer Direktstrahlposition zu ihrer Umkehrstrahlposition ist, der zweite Haken (25) aus dem ersten Haken (23) austritt und der Schaft (17) zum Streckanschlagen in dem Körper (15) kommt, was das Indrehungversetzen der Klappe (9) von ihrer Direktstrahlposition zu ihrer Umkehrstrahlposition unter der Zugkraft, die von dem Schaft (17) ausgeübt wird, erlaubt.

2. Schubumkehrer nach Anspruch 1, wobei der Pleuelmechanismus (11, 13) außerdem ein Dreieck aus Gelenkpleueln (13) umfasst, das zwischen dem Teleskoppleuel (11), der Aufnahme (7) und der Schubumkehrerklappe (9) eingefügt ist.

3. Gondel für Flugzeugmotor, die mit einem Schubumkehrer nach einem der Ansprüche 1 oder 2 ausgestattet ist.

## Claims

1. A cascade-type thrust reverser, comprising:
- a fixed front frame (1),
- a plurality of cascade vanes (3) secured to this front frame (1),
- a sliding cowl (5) mounted between a direct jet position where it covers these cascades (3), and a reverse jet position in which it uncovers these cascades (3),
- at least one housing (7) for receiving a thrust reverser flap (9) formed in the upstream portion of the sliding cowl (5),
- at least one thrust reverser flap (9) pivotally mounted in this housing (7), between a direct jet position where it is stored in this housing, and a reverse jet position in which it is out of this housing (7), and
- a connecting rod mechanism (11, 13) connecting said front frame (1) to said flap (9), adapted to pivot this flap (9) from its direct jet position to its reverse jet position under the effect of the sliding of said cowl (5) from its direct jet position to its reverse jet position,
this thrust reverser being remarkable in that it comprises a first hook (23) fixedly mounted within said housing (7), and in that said connecting rod mechanism (11, 13) comprises a telescopic connecting rod (11) comprising:
- a body (15) provided with a second hook (25),
- a rod (17) slidably mounted within this body (15),
- a spring (19) returning this rod (17) in the extended position relative to the body (15), and
- a stop (21, 31) preventing the rod (17) to get out from the body (15),
- the assembly of these members being arranged so that:
- when said sliding cowl (5) and said flap (9) are in the direct jet position, said second hook (25) is held in engagement with said first hook (23) and said flap (9) is immobilized at the bottom of said housing (7) by said rod (17) subjected to a pre-stress generated by said compressed spring (19), and
- when said sliding cowl (5) is at the beginning of sliding from its direct jet position to its reverse jet position, said second hook (25) is disengaged from said first hook (23) and said rod (17) comes in extended abutment in said body (15), allowing to rotate said flap (9) from its direct jet position to its reverse jet position under the tensile force exerted by said rod (17).

2. The thrust reverser according to claim 1, wherein said connecting rod mechanism (11, 13) further comprises a triangle of articulated connecting rods (13), interposed between said telescopic connecting rod (11), said housing (7) and said thrust reverser flap (9).

3. A nacelle for an aircraft engine equipped with a thrust reverser in accordance with any of claims 1 or 2.
